# EUROPEAN PATENT SPECIFICATION

(11) **EP 2 935 820 B1**
(45) Date of publication and mention of the grant of the patent: **29.03.2017**
(21) Application number: 13789163.6
(22) Date of filing: 06.11.2013
(51) Int. Cl.: F01N 13/18, F16L 21/06, F16L 33/04

(54) **AN EXHAUST PIPE BAND CLAMP**
AUSPUFFLEITUNGSBANDSCHELLE
COLLIER DE SERRAGE DE TUYAU D'ÉCHAPPEMENT

(30) Priority: 06.11.2012 DK 201270679
(43) Date of publication of application: 28.10.2015
(73) Proprietor: Cisma Solutions ApS, 8600 Silkeborg (DK)
(72) Inventor: EDEMANN, Svend Ove, DK-6400 Sønderborg (DK)
(74) Representative: Olesen, Birthe Bjerregaard
(86) International application number: PCT/DK2013/050358
(87) International publication number: WO 2014/071950

(56) References cited:
- DE-B- 1 176 940
- FR-A1- 2 775 753
- US-A1- 2007 176 425

## Description

### Field of the Invention

The present invention relates to a band clamp for connecting different parts of an exhaust pipe connected to an internal combustion engine.

In addition the present invention relates to a method for making the band clamp as well as use of the band clamp for connecting parts of the exhaust pipe, e.g. in motor vehicles.

### Background of the Invention

Several exhaust pipe clamps are known. The known pipe clamps usually comprise a belt part intended to extend around the pipes to be connected. In addition, the prior art pipe clamps have a flange at each end of the belt portion. Usually the flanges are provided with a hole for the fastening means, e.g. a bolt and a nut.

A pipe clamp according to the preamble of claim 1 is known from DE 1176940 (B1). Another example of a pipe band clamp is disclosed in US2004/0261227 (A1). The pipe clamp disclosed herein is comprised of a unitary piece of sheet metal and has reinforcements provided at the central part of the area where the flanges are attached to the belt part and extend onto a portion of the belt part. The reinforcements are stamped into the sheet of material and provide recesses in the metal strip. The effect of this reinforcement is not discussed, but will probably reduce the tendency to bend in the area where the flanges are attached to the belt part when the clamp is tightened.
DE 102006057881(B3) discloses another pipe clamp having reinforcements in the area where the tightening means or flanges are attached to the belt part. The particular construction of the flanges causes use of cylinder shaped nuts in both which only provides a small area for transferring forces between the locking means, i.e. the bolt and the cylinder shaped nuts, which may result in increased friction between the nuts and the flanges, which in turn also can result in the nuts causing damage to the flanges.

Other examples of exhaust pipe clamps made of one piece of sheet or strip of metal are disclosed in US 2042263 A and US 3134155 A. These prior art clamps do not have any reinforcing ribs and will bend in the area where the flanges are attached to the belt part when the clamp is tightened around the pipe.

The clamp disclosed WO 1995/011403 (A1) comprises a belt part onto which the flanges and reinforcement ribs are attached as separate parts which are welded or soldered onto the belt part. This construction is likely to corrode in the weldings/soldering due to the heat from the exhaust pipe and other factors, e.g. humidity, which will reduce the lifetime of the belt clamp significantly.

Thus there is still a need for providing alternatively constructed exhaust pipe clamps which have a low overall weight, since reduction of weight of parts is an important factor in automotive industry in order to reduce the overall weight of the automotive.

In addition, there is still a need for providing alternatively constructed exhaust pipe clamps which are made from a reduced number of parts, and which
- provide a sufficient force acting on the exhaust pipe parts to be connected,
- have a prolonged lifetime, since they are less likely to break
- are easy to produce from one strip of metal, and
- cause less metal waste and thereby reducing the overall manufacturing costs and the manufacturing costs of each unit.

### Object of the Invention

The present invention eliminates the drawbacks of the prior art exhaust pipe clamps and provide an exhaust pipe clamp and a method of producing the exhaust pipe clamp which fulfil the above mentioned needs.

### Description of the Invention

The object of the present invention is obtained by an exhaust pipe band clamp for connecting separate pipes in an engine exhaust pipe system and comprising a belt part and fastening means, in which the fastening means includes flanges located at the ends of the belt part and formed integrally with the belt part whereby, during tightening said first and second end flanges are drawn toward each other, and wherein the flanges and a portion of the belt are provided with reinforcing ribs, which are made by bending a part of the longitudinal edges of the band clamp so that the reinforcing ribs extend upright in relation to the outer surface of the flanges and the first portion of the belt and which reinforcing ribs extend along each of the edges of each of the end parts via the flanges and an end portion of the belt. The exhaust pipe band clamp's free end part of each of the flanges is bent preferably perpendicularly, or substantially perpendicularly to the outer surface of the flanges whereby end surfaces of the flanges face towards each other in opposite direction to the outer surface of the flanges.

Hereby a simple construction is provided, which provide a stop in order to avoid deformation of the pipe clamp if it is tightened too much. The stop further serves as a visual indicator for when to stop tightening of the fastening means since there is allowed a short distance between the end surfaces of the flanges, when the fastening means are sufficiently tightened.

In an embodiment, the end surface of the first flange has a protrusion and the end surface of the second flange has a corresponding cut-out. It is preferred that the shapes of the protrusion and the cut-out are curved in corresponding manner, preferably in order to resemble a part of a circle, oval or the like. This ensures that the clamp is tightened correctly. If the male part and the female part are not fully aligned when the fastening means are tightened, the male part of the clamp will slide on the surface and end in the female part in order to let the ends meet. Hereby, the clamp will not be tightened askew.

In another embodiment of the exhaust pipe band clamp the reinforcing ribs are bent in order to extend in perpendicular, or substantially perpendicular manner to the outer surface of the flanges and the portion of the belt, which further improves the reinforcing effect of the ribs and also ensures sufficient stability of the pipe clamp during tightening and use.

These embodiments provide alternatively constructed exhaust pipe clamps which provide sufficient force acting on the exhaust pipe parts to be connected, have a long lifetime because they are less likely to break. In addition the exhaust pipe clamps are easy to produce from one strip of metal, and cause less metal waste and thereby reducing the overall manufacturing costs and time as well as reducing the manufacturing costs of each unit.

The belt part is preferably bent in circular or substantially circular shape, although other shapes are possible, depending on the shape of the exhaust pipe system on which the pipe clamp is used.

The above mentioned objects of the present invention are also met by a method for producing an exhaust pipe band clamp by providing a metal strip wherein the first end of the metal strip has a protrusion and the end of metal strip has a corresponding cut-out, and providing the reinforcement ribs by bending a part of the longitudinal edges of the clamp to an upright position in relation to the outer surface of the clamp, said reinforcing ribs extending along the edges of the flanges and the end portions of the belt and wherein the height of the reinforcing rib corresponds to the width of the bent part which forms the reinforcing rib.

In one embodiment of the method, the end flanges are formed in a step preceding the step of forming the reinforcing ribs.

In another embodiment of the method the end parts of the flanges are bent in order to extend upright manner in relation to the inner surface of the flanges and the portion of the belt simultaneously with the step of forming the flanges.

These embodiments of the method provide a simplified and reliable production and reduce the amount of metal waste arising during production which in turn reduces manufacturing costs. In addition, the method eliminates the need for welding different parts of the clamp together, which also will increase lifetime of the exhaust clamp.

Finally, the strip is bent in order to provide the belt its final form, e.g. circular, oval or the like, e.g. during mounting of the exhaust pipe clamp.

Finally, the present invention provides a use of the clamp for connecting separate parts of an engine exhaust pipe system, e.g. where one of the separate pipe parts is the tail pipe.

### Description of the Drawing

The invention will be explained more fully below with reference to the drawing, in which:
- Fig. 1: shows a perspective view of the exhaust pipe band clamp according to the invention
- Fig. 2: shows a side view of the exhaust pipe band clamp according to the invention seen in direction of arrow A in fig. 1
- Fig. 3: shows top view of the exhaust pipe band clamp according to the invention seen in direction of arrow B in fig. 1
- Fig. 4: shows a second side view the exhaust pipe band clamp according to the invention seen in direction of arrow C in fig. 1, and
- Figs. 5a-d: shows the intermediate steps during manufacturing of the exhaust pipe band clamp.

### Detailed Description of the Invention

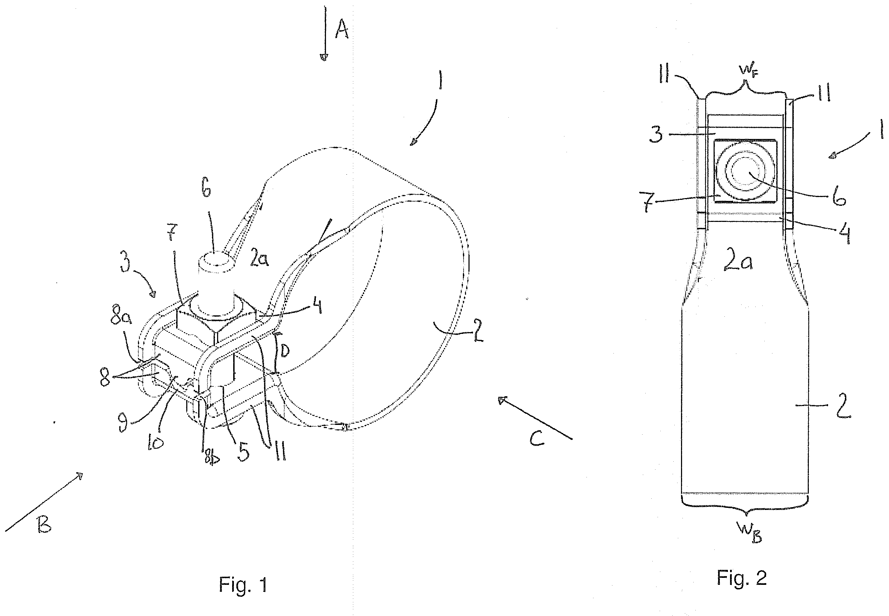

Reference is made to fig. 1 which shows the exhaust pipe band clamp 1, in the following also mentioned as a clamp, in a perspective view. The exhaust pipe clamp 1 is particularly suitable for mounting the tail pipe onto the exhaust pipe, but may also be used for connecting other parts of the exhaust pipe as well. The two pipes which are to be coupled together preferably have slightly different diameters at the adjoining ends with one inside the other in a telescoping manner to form a lap joint. The outer pipe may have slits allowing the outer pipe to adjust the diameter to the diameter of the inner pipe during mounting of the exhaust pipe clamp.

The exhaust pipe clamp 1 has a belt part 2 and a pair of flanges 3 at each end of the belt part 2. Each of the flanges 3 are provided with a bore 5 for attaching conventional fastening means, e.g. a bolt 6 and a nut 7 as described below.

The belt part 2 is preferably bent in circular or substantially circular shape, although other shapes are possible, depending on the shape of the exhaust pipe system on which the exhaust pipe clamp is used. Thus, the belt 2 of the exhaust pipe clamps may e.g. also be oval or otherwise shaped in order to correspond in shape to the exhaust pipe onto which it is to be attached.

The flanges 3 on the clamp 1 are provided by bending a strip of metal into the desired shape as will be described below. Thus, the flanges 3 are attached to the belt 2 at the bent area 4.

The clamp 1 is provided with reinforcement ribs 11 along the sides of the flanges 3. The reinforcement ribs 11 are preferably substantially perpendicular to the outer surface of the flanges 3. The reinforcement ribs 11 extend from the flanges 3 and onto the ends of the belt 2. The reinforcement ribs 11 are also provided by bending the strip of metal into the desired shape, see below. Thus, the width W_{f} of the clamp 1 is slightly reduced in the area of the flanges 3 and the end portions 2a of the belt 2 when compared to the width W_{b} of the belt 2, see e.g. fig. 2.

In order to achieve a high degree of mechanical strength (pull-apart strength) and a good gas-tight seal in the exhaust pipe joint, it is necessary to tighten the fastening means, e.g. the bolt 6 and nut 7, sufficiently to stretch the belt part 2 slightly so as to develop the desired degree of tensile stress on the pipe connection. Therefore, the clamp tightening mechanism, especially the connection between the flanges 3 and the belt part 2 must exhibit sufficient structural strength to transmit the necessary forces from the fastening means 6, 7 to the belt 2. The reinforcement ribs 11 increases the strength of the clamp 1 in this particular area, and especially in the bend area 4 between the flange 3 and the belt 2.

In addition, the end parts 8 of the flange 3 are preferably perpendicular, or substantially perpendicular to the flanges 3. Hereby the ends 8a, 8b of the flanges 3 are facing towards each other and provide a stop for indicating when to stop tightening the locking means 6, 7.

There is preferably a short distance, e.g. up to 5-6 mm and preferably 0.1-3 mm, between the ends 8a, 8b when the pipe clamp 1 is tightened sufficiently around the exhaust pipe parts. Thus, the bent ends 8 of the flanges 3 also serve as an indicator for when to stop tightening the fastening means 6, 7.

In case the fastening means 6, 7 are tightened and the ends 8a, 8b meet each other, the reinforcing ribs 11 ensure that force needed to further tighten the fastening means increase significantly and that the clamp 1 is less likely to bend in the area 4 where the flanges 3 are connected to the belt part 2.

When the fastening means, e.g. the bolt 6 and the nut 7, are tightened the reinforcement ribs 11 will reduce or even eliminate any deformation of the clamp 1, especially in the bent area 4 between the flanges 3 and the belt portion 2. This further reduces the risk of deformation of the exhaust pipes on which the clamp is attached. This reduced tendency of deformation of the clamp 1 is even further reduced by providing the above described end stop, i.e. the end surfaces 8a, 8b.

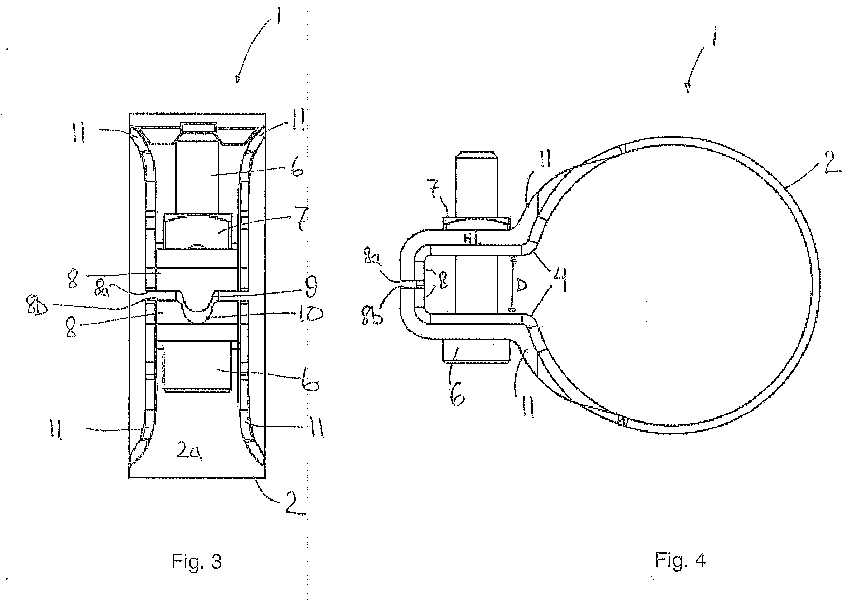

The distance D between the flanges in tightened mode, see fig. 4, ensures that the force acting on the pipe is sufficient for maintaining the exhaust pipe parts in position and reduces the risk of the connected exhaust pipe parts dislodging over time.

In addition, by selecting the size of the nut 7 in close relation to the distance between the reinforcement ribs 11, the reinforcement ribs 11 may also serve to prevent the nut 7 from rotating when the bolt 6 is tightened.

One of the ends 8a, 8b may have a protrusion 9 and the other of the ends 8a, 8b a corresponding cut-out 10. The protrusion 9 and the cut-out 10 have corresponding shape and will thus resemble a male and a female part when the clamp 1 ends 8a, 8b meet each other. The shapes of the male and female parts 9, 10 are preferably curved in order to resemble a part of a circle, oval or similar form. This ensures that the clamp 1 is tightened correctly, since the male part 9, if the clamp 1 is askew when the fastening means 6, 7 are tightened, will slide on the surface 8b and end in the female part 10 when the clamp 1 is tightened in order to let the ends 8a, 8b meet. Hereby, the clamp 1 will not be tightened askew.

The clamp 1 is preferably made of metal, e.g. steel, and preferably stainless steel alloys. The skilled person will be able to select stainless steel alloys which are suitable for use in connection with engine exhaust pipes.

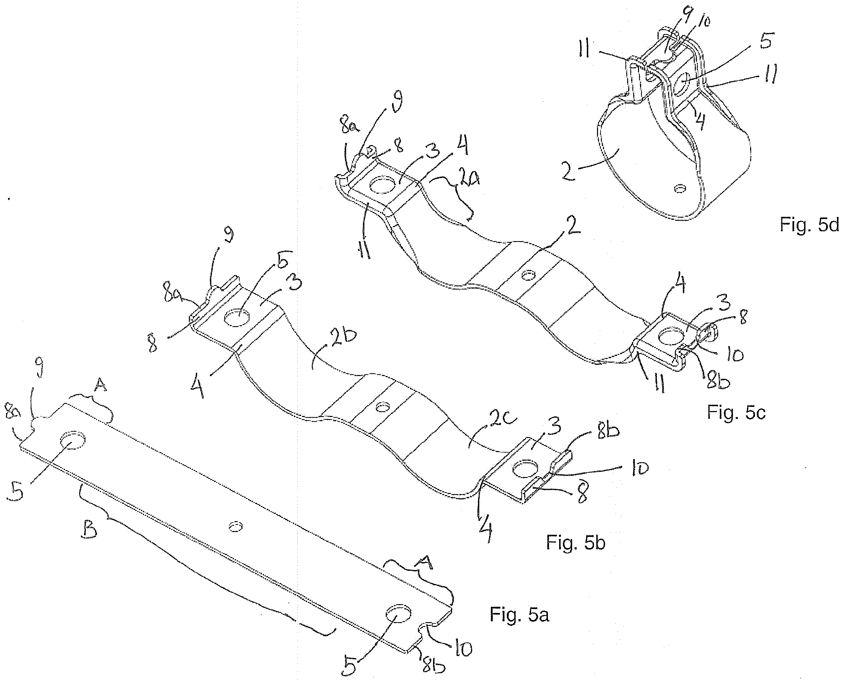

The clamp 1 is made from one piece or strip of stainless steel as illustrated in fig. 5a. Firstly, the bores 5 for the fastening means and the male 9 and the female 10 end parts are provided in the strip. The male and female parts can be cut simultaneously along a common cut when cutting the metal strip from a larger strip of metal as the shape of the end female 10 and the male parts 9 correspond to each other. As can be seen in fig. 5a the width of the entire strip in fig. 5a corresponds to the width Wb of the belt part 2. Next, the belt part 2 is shaped into two semi circular shaped parts 2b, 2c, the flanges 3 are bent into the desired angle, in relation to the belt part 2, and the end parts 8 of the flanges are bent substantially perpendicularly to the flanges 3 as shown in fig. 5b, in order to let the protrusion (Male part) on end 8a meet with the cut-out (Female part) on the other end 8b. It is preferred that the angle is such that the flanges 3 are parallel to each other when the pipe clamp 1 is tightened and there is a distance of 2 mm between the end surfaces 8a, 8b. Then, the reinforcement ribs 11 are made by bending that part of the longitudinal edges of the clamp 1, extending along the edges of the end parts 8, the flanges 3 and the end portions 2a of the belt 2 as can be seen in fig. 5c. The reinforcing ribs 11 are bent so that they extend upright in perpendicular or substantially perpendicular manner in relation to the outer surface of the flanges, the end parts 8 and the belt part 2. The height H (see fig. 4) of the reinforcing rib 11 corresponds to the width of bent part of the strip which forms the reinforcing rib 11. The height of the reinforcement ribs 11 on the belt portion 2a decreases in height as the distance from the flange 3 increases. Finally, the clamp 1 is formed into its final substantially circular (or oval) shape as indicated in fig. 5d, e.g. when mounting the clamp 1 on the exhaust pipe.

This production method is simple, reliable and reduces the amount of metal waste arising during production of the clamps 1, which is an important factor in reducing the price for manufacturing the exhaust pipe clamps 1. In addition, the method eliminates the need for welding different parts of the clamp together. Hereby the lifetime of the exhaust clamp is significantly increased, since heat, humidity etc. influencing the exhaust pipe clamp 1 when attached to the exhaust pipe would cause any weldings to corrode under operating conditions of the engine exhaust pipe.

### Reference signs

- 1:: Exhaust pipe band clamp
- 2 :: Belt part
- 2a:: Belt part with reinforcement ribs 11 along the edge
- 2b,2c:: Semi circular parts of belt part
- 3 :: Flange for fastening means
- 4 :: Bend portion between flange 3 and belt portion
- 5 :: Bore for fastening means
- 6 :: Fastening means, bolt
- 7 :: Fastening means, nut
- 8 :: End part of locking flange
- 8a, 8b:: Ends of locking flange
- 9 :: Protrusion (Male part) of end 8a
- 10:: Cut-out (Female part) of end 8b
- 11:: Reinforcing rib
- W_{f}:: Width of flange 3
- W_{b}:: Width of belt part 2
- D:: Distance between flanges 3 (fig. 4)
- H:: Height of reinforcing rip (fig. 4)

## Claims

1. Exhaust pipe band clamp for connecting separate pipes in an engine exhaust pipe system in a telescopic connection and comprising a belt part having a rectangular cross section, when seen in the axial direction of the belt part, and fastening means, in which the fastening means includes flanges located at the ends of the belt part and formed integrally with the belt part whereby, during tightening said first and second end flanges are drawn toward each other, and wherein the flanges (3) and a portion (2a) of the belt (2) are provided with reinforcing ribs (11), which are provided by bending a part of the longitudinal edges of the band clamp (1), which reinforcing ribs (11) extend upright in relation to the outer surface of the flanges (3) and the portion (2a) of the belt (2) and along each of the edges of each of the end parts (8), via the flanges (3) and an end portion (2a) of the belt (2), **characterized in, that** the free end part (8) of each of the flanges (3) is bent preferably perpendicularly, or substantially perpendicularly to the outer surface of the flanges (3) whereby ends (8a, 8b) of the flanges (3) are facing towards each other and in opposite direction to the outer surface of the flanges (3), and wherein the end (8a) of the first flange (3) has a protrusion (9) and the end (8b) of the second flange (3) a corresponding cut-out (10), and wherein the shapes of the protrusion (9) and the cut-out (10) are curved in corresponding manner.

2. Exhaust pipe band clamp according to claim 1, wherein the reinforcing ribs (11) are bent in order to extend in perpendicular or substantially perpendicular manner to the outer surface of the flanges (3) and the portion (2a) of the belt (2).

3. Exhaust pipe band clamp according to claim 1 or 2, wherein the shapes of the protrusion (9) and the cut-out (10) resemble a part of a circle, oval or the like.

4. A method for producing an exhaust pipe band clamp as defined in any of the claims 1-3, **characterized by** providing a metal strip having a rectangular cross section when seen in the axial direction (C) of the belt part and providing reinforcement ribs (11) by bending a part of the longitudinal edges of the clamp (1) to an upright position in relation to the outer surface of the clamp (1), said reinforcing ribs (11) extending along the edges of the flanges (3) and the end portions (2a) of the belt (2) and wherein the height of the reinforcing ribs (11) corresponds to the width of the bent part which forms the reinforcing rib (11), wherein the first end (8a) of the metal strip has a protrusion (9) and the second end (8b) of metal strip has a corresponding cut-out (10) provided in the metal strip prior to shaping of the clamp (1).

5. A method according to claim 4, wherein the end flanges (3) are formed in a step preceding the step of forming the reinforcing ribs (11).

6. A method according to claim 5, wherein the end parts (8) of the flanges (3) are bent in order to extend upright manner in relation to the inner surface of the flanges (3) and the portion (2a) of the belt (2) simultaneously with the step of forming the flanges (3).

7. Use of a clamp according to any of claims 1-3 or as provided by the method according to claims 4-6 for connecting separate parts of an of an engine exhaust pipe system.

8. Use of a clamp according to claim 7 wherein one of the separate parts is the tail pipe.

## Patentansprüche

1. Auspuffleitungsbandschelle zum Verbinden separater Leitungen in einem Motorauspuffleitungssystem in einer teleskopischen Verbindung und umfassend einen Riementeil mit einem rechteckigen Querschnitt betrachtet in Axialrichtung des Riementeils, und ein Befestigungsmittel, wobei das Befestigungsmittel Flansche aufweist, die an den Enden des Riementeils angeordnet sind und einstückig mit dem Riementeil gebildet sind, wodurch beim Anziehen der erste und zweite Endflansch zueinander hin gezogen werden, und wobei die Flansche (3) und ein Abschnitt (2a) des Riemens (2) mit Verstärkungsrippen (11) versehen sind, die durch Biegen eines Teils der Längskanten der Bandschelle (1) bereitgestellt sind, wobei sich die Verstärkungsrippen (11) im Verhältnis zur Außenfläche der Flansche (3) und dem Abschnitt (2a) des Riemens (2) und entlang der einzelnen Kanten der jeweiligen Endteile (8) über die Flansche (3) und einen Endabschnitt (2a) des Riemens (2) aufrecht erstrecken, **dadurch gekennzeichnet, dass** der freie Endteil (8) eines jeden Flansches (3) vorzugsweise senkrecht oder im Wesentlichen senkrecht zur Außenfläche der Flansche (3) gebogen ist, wodurch Enden (8a, 8b) der Flansche (3) zueinander hin und in entgegengesetzte Richtung zur Außenfläche der Flansche (3) gewandt sind, und wobei das Ende (8a) des ersten Flansches (3) einen Vorsprung (9) aufweist und das Ende (8b) des zweiten Flansches (3) eine entsprechende Aussparung (10) aufweist, und wobei die Formen des Vorsprungs (9) und der Aussparung (10) in entsprechender Weise gekrümmt sind.

2. Auspuffleitungsbandschelle nach Anspruch 1, wobei die Verstärkungsrippen (11) gebogen sind, um sich senkrecht oder im Wesentlichen senkrecht zur Außenfläche der Flansche (3) und dem Abschnitt (2a) des Riemens (2) zu erstrecken.

3. Auspuffleitungsbandschelle nach Anspruch 1 oder 2, wobei die Formen des Vorsprungs (9) und der Aussparung (10) einem Teil eines Kreises, eines Ovals oder dergleichen gleichen.

4. Verfahren zum Herstellen einer Auspuffleitungsbandschelle nach einem der Ansprüche 1-3, **gekennzeichnet durch** Bereitstellen eines Metallstreifens mit einem rechteckigen Querschnitt betrachtet in der Axialrichtung (C) des Riementeils und Bereitstellen von Verstärkungsrippen (11) durch Biegen eines Teils der Längskanten der Schelle (1) in eine aufrechte Stellung im Verhältnis zur Außenfläche der Schelle (1), wobei die Verstärkungsrippen (11) sich entlang der Kanten der Flansche (3) und der Endabschnitte (2a) des Riemens (2) erstrecken und wobei die Höhe der Verstärkungsrippen (11) der Breite des gebogenen Teils entspricht, der die Verstärkungsrippe (11) bildet, wobei das erste Ende (8a) des Metallstreifens einen Vorsprung (9) aufweist und das zweite Ende (8b) des Metallstreifens eine entsprechende Aussparung (10) aufweist, die vor dem Formen der Schelle (1) in dem Metallstreifen bereitgestellt wird.

5. Verfahren nach Anspruch 4, wobei die Endflansche (3) in einem Schritt vor dem Schritt des Bildens der Verstärkungsrippen (11) gebildet werden.

6. Verfahren nach Anspruch 5, wobei die Endteile (8) der Flansche (3) gleichzeitig mit dem Schritt des Bildens der Flansche (3) gebogen werden, um sich im Verhältnis zur Innenfläche der Flansche (3) und dem Abschnitt (2a) des Riemens (2) aufrecht zu erstrecken.

7. Verwendung einer Schelle nach einem der Ansprüche 1-3 oder wie durch das Verfahren nach den Ansprüchen 4-6 bereitgestellt, um separate Teile eines Motorauspuffleitungssystems zu verbinden.

8. Verwendung einer Schelle nach Anspruch 7, wobei eins der separaten Teile die Endleitung ist.

## Revendications

1. Collier de serrage de tuyau d'échappement pour raccorder des tuyaux distincts dans un système de tuyau d'échappement de moteur dans un raccordement télescopique et comprenant une partie courroie comprenant une section transversale rectangulaire, vu dans la direction axiale de la partie courroie, et un moyen de fixation, dans lequel le moyen de fixation comprend des brides situées au niveau des extrémités de la partie courroie et formées d'un seul tenant avec la partie courroie, moyennant quoi, pendant le serrage, lesdites première et seconde brides d'extrémité sont tirées l'une en direction de l'autre, et dans lequel les brides (3) et une partie (2a) de la courroie (2) sont dotées de nervures de renforcement (11), qui sont fournies par le coudage d'une partie des bords longitudinaux du collier de serrage (1), lesdites nervures de renforcement (11) s'étendant verticalement par rapport à la surface externe des brides (3) et à la partie (2a) de la courroie (2) et le long de chacun des bords de chacune des parties d'extrémité (8), via les brides (3) et une partie d'extrémité (2a) de la courroie (2), **caractérisé en ce que** la partie d'extrémité libre (8) de chacune des brides (3) est coudée de préférence perpendiculairement, ou sensiblement perpendiculairement à la surface externe des brides (3), moyennant quoi des extrémités (8a, 8b) des brides (3) se font face et sont dirigées dans une direction opposée à la surface externe des brides (3), et dans lequel l'extrémité (8a) de la première bride (3) présente une saillie (9) et l'extrémité (8b) de la seconde bride (3) une découpe correspondante (10), et dans lequel les formes de la saillie (9) et de la découpe (10) sont incurvées de manière correspondante.

2. Collier de serrage de tuyau d'échappement selon la revendication 1, dans lequel les nervures de renforcement (11) sont coudées afin de s'étendre de manière perpendiculaire ou sensiblement perpendiculaire à la surface externe des brides (3) et à la partie (2a) de la courroie (2).

3. Collier de serrage de tuyau d'échappement selon la revendication 1 ou 2, dans lequel les formes de la saillie (9) et de la découpe (10) ressemblent à une partie d'un cercle, d'un ovale ou similaire.

4. Procédé de production d'un collier de serrage de tuyau d'échappement selon l'une quelconque des revendications 1 à 3, **caractérisé en ce qu'**il fournit une bande métallique comprenant une section transversale rectangulaire vu dans la direction axiale (C) de la partie courroie et fournit des nervures de renforcement (11) par le coudage d'une partie des bords longitudinaux de la pince (1) vers une position verticale par rapport à la surface externe de la pince (1), lesdites nervures de renforcement (11) s'étendant le long des bords des brides (3) et des parties d'extrémité (2a) de la courroie (2) et dans lequel la hauteur des nervures de renforcement (11) correspond à la largeur de la partie coudée qui forme la nervure de renforcement (11), dans lequel la première extrémité (8a) de la bande métallique comprend une saillie (9) et la seconde extrémité (8b) de la bande métallique comprend une découpe correspondante (10) disposée dans la bande métallique avant la formation de la pince (1).

5. Procédé selon la revendication 4, dans lequel les brides d'extrémité (3) sont formées dans une étape précédant l'étape de formation des nervures de renforcement (11).

6. Procédé selon la revendication 5, dans lequel les parties d'extrémité (8) des brides (3) sont coudées afin de s'étendre de manière verticale par rapport à la surface interne des brides (3) et à la partie (2a) de la courroie (2) simultanément avec l'étape de formation des brides (3).

7. Utilisation d'une pince selon l'une quelconque des revendications 1 à 3 ou selon le procédé selon les revendications 4 à 6 pour raccorder des parties distinctes d'un système de tuyau d'échappement de moteur.

8. Utilisation d'une pince selon la revendication 7 dans laquelle l'une des parties distinctes est le tuyau arrière d'échappement.
